(19) **Europäisches Patentamt**

**European Patent Office**

**Office européen des brevets**

(11) **EP 0 718 605 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(51) Int Cl.$^7$: **G01F 1/704**

(21) Anmeldenummer: **94810745.3**

(22) Anmeldetag: **22.12.1994**

(54) **Verfahren zur Bestimmung von Gasmassenströmen**

Method for determining gas mass flow rates

Procédé de détermination des débits massiques

(84) Benannte Vertragsstaaten:
**DE ES FR GB**

(43) Veröffentlichungstag der Anmeldung:
**26.06.1996 Patentblatt 1996/26**

(73) Patentinhaber: **ALSTOM (Schweiz) AG**
**5400 Baden (CH)**

(72) Erfinder:
• **Baumann, Peter, Dr.**
**CH-5253 Effingen (CH)**
• **Blangetti, Francisco L., Dr.**
**CH-5400 Baden (CH)**

(56) Entgegenhaltungen:
**EP-A- 0 136 946** **CH-A- 410 471**
**US-A- 3 881 351**

## Beschreibung

Technisches Gebiet

Die Erfindung betrifft ein Verfahren zur Ermittlung des Gasmassenstromes eines in einer unter Vakuum stehenden Leitung strömenden Gasgemisches unter Verwendung eines an diesem Gasgemisch beteiligten Gases als Tracer, wobei die Komponenten des Gasgemisches bekannt sind.

Stand der Technik

Ein derartiges Verfahren ist aus Kraftwerksanlagen bekannt zur Bestimmung des Gasmassenstromes in Entlüftungsrohren von Kondensatoren, wie zum Beispiel in der Handbuchreihe Energie, Band 5, "Konzeption und Aufbau von Dampfkraftwerken", Technischer Verlag Resch, Verlag TÜV Rheinland, 1985, Seiten 265-267 beschrieben. Das Gasgemisch besteht dort im wesentlichen aus Wasserdampf und Luft. Die Bestimmung des Massenstromes erfolgt üblicherweise mit einem Quadrupol-Massenspektrometer, unter Verwendung von Helium als Tracer-Gas.

Das Messverfahren bedingt eine umfangreiche Messapparatur und einen Spezialisten für die Eichung und Bedienung des Spektrometers.

Der Aufwand einer solchen Messung ist demnach so hoch, dass regelmässige Diagnosemessungen, oder permanente Überwachungen nach oben beschriebener Art unrentabel sind und damit selten durchgeführt werden.

In der CH-A-410 471 wird ein Verfahren beschrieben zur Bestimmung eines Teilmassenstromes eines an einem Gasstrom beteiligten Gases. Hierfür wird dem Gasstrom ein Hilfsgas zugeführt, das sonst im Gasstrom nicht vorhanden ist. Stromabwärts wird das Verhältnis des Partialdrucks des Hilfsgases zu dem des im Gasstrom beteiligten Gases gemessen. Der Teilmassenstrom kann sodann bestimmt werden, indem dieser zum Verhältnis der Partialdrücke proportional ist.

Die US-A-3 881 351 offenbart ein Verfahren zur Bestimmung des Massenstroms einer Komponente in einem Gasstrom. Dort wird ein Tracer-Gas von bekanntem molekularem Gewicht dem Gasstrom zugeführt, wobei dieses sonst im Gasstrom nicht vorhanden ist. Mittels einem Konzentrationsmessgerät wird die Konzentration des zu bestimmenden Gases sowie die des Tracer-Gases gemessen und aus den Messwerten zusammen mit dem Massenstrom des Tracer-Gases und deren molekularem Gewichten der Massenstrom des zu bestimmenden Gases berechnet.

## Darstellung der Erfindung

Der Erfindung liegt die Aufgabe zugrunde, eine Methode bereitzustellen, mit der Gasmassenströme in unter Vakuum stehenden Leitungen quantitativ auf einfache Art erfasst werden können, unter der Voraussetzung, dass die Gasgemischkomponenten bekannt sind.

Erfindungsgemäss wird dies durch die kennzeichnenden Merkmale des Anspruchs 1 erreicht.

Dabei werden Druckmessungen im gasstromführenden, unter Vakuum stehenden System einmal im zur Systemumgebung gasdichten Zustand durchgeführt, und anschliessend wird das Gasgemisch stromaufwärts der Druckmesstelle kontinuierlich mit einem definierten Tracer-Gasstrom angereichert, bevor die Druckmessungen wiederholt werden.

Die aus den Druckmessungen bestimmten Molanteile des Tracers und die Massenbilanzen des Gesamtsystems und des Tracers im besonderen ermöglichen die Berechnung des Gasgemischgesamtmassenstromes.

Die Vorteile der Erfindung zeigen sich vor allem in der einfachen Einrichtung und Bedienung der Messapparatur, die günstigenfalls, z.B. bei Messungen an Kraftwerkskondensatoranlagen, aus zwei Druckmessgeräten und einer Kritische Blende besteht, wobei Sauerstoff als Tracer verwendet wird und bei vorhandenem überkritischem Druckverhältnis dem Gasgemisch atmosphärische Luft zugeführt wird, deren Sauerstoffanteil mit 21% angenommen wird.

## Kurze Beschreibung der Zeichnung

In der Zeichnung sind zwei Ausführungsbeispiele der Erfindung anhand einer Kraftwerksanwendung schematisch dargestellt.
Es zeigt:

Fig. 1    eine Niederdruckturbine mit anschliessendem Kondensator;

Fig. 2    eine Saugerleitung des Kondensators mit Messeinrichtung;

Fig. 3    eine Ausführungsvariante der Saugerleitung nach Fig. 2.

In den Figuren sind jeweils gleiche Teile mit denselben Bezugszeichen versehen, wobei nur die für das Verständnis der Erfindung wesentlichen Elemente gezeigt sind. Strömungsrichtungen der Arbeitsmittel sind mit Pfeilen gekennzeichnet.

## Weg zur Ausführung der Erfindung

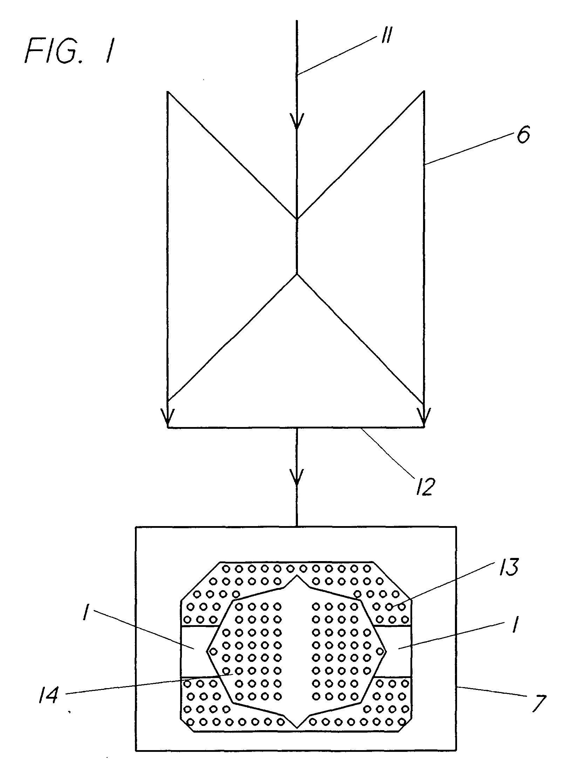

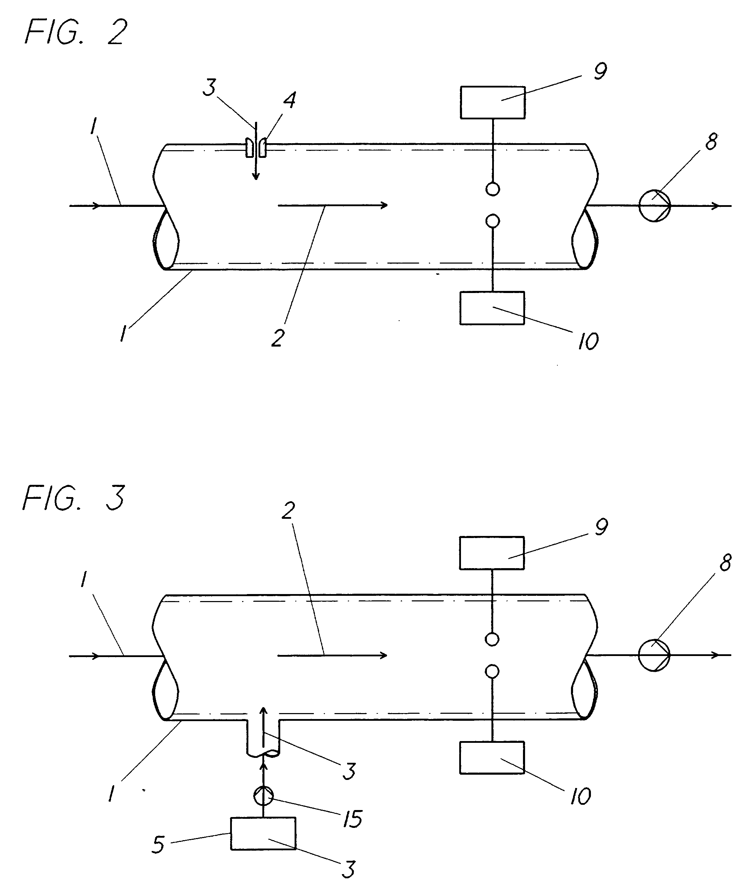

Nach Fig. 1 ist mit 6 eine Niederdruckturbine einer Kraftwerksanlage vereinfacht dargestellt. Sie wird mit Dampf aus der Leitung 11 angeströmt. Der entspannte Dampf strömt weiter durch die Leitungen 12 und wird anschliessend in den Kondensationsbündeln 13 des Kondensators 7 niedergeschlagen. Nichtkondensierbare, im Dampf enthaltene Gase, werden durch die an die Luftkühler 14 anschliessende Saugerleitung 1 abgeführt. Anhand des Ausführungsbeispiels in Fig. 2 wird nun die Bestimmung des Massenstromes in der Saugerleitung 1 erläutert, wobei durch eine Kritische Blende 4 ein konstanter Tracer-Molenstrom 3 in die Leitung einströmt.

Voraussetzung hierfür ist, dass das Druckverhältnis zwischen dem Vakuum in der Saugerleitung 1 und ihrer atmosphärischen Umgebung überkritisch ist. Für atmosphärische Luft muss dieses stoffabhängige, überkritische Druckverhältnis von Innendruck zu Aussendruck der Saugerleitung 1 kleiner 0,528 sein, eine Bedingung, die für Saugerleitungen mit einem typischen Innendruck von µ 0,2 bar und einem atmosphärischen Aussendruck von 1 bar, gegeben ist.

Gemäss dieser Voraussetzung wird bei Bedarf mittels der verschliessbaren Kritischen Blende 4, die stromaufwärts des Gasgemischstromes das Vakuum in der Leitung mit der die Leitung umgebenden Atmosphäre verbindet, Luft mit Sauerstoff als Tracer 3 dem Gasgemisch 2 zugeführt. Die Anreicherung des Gasgemisches erfolgt durch die Blende 4 mit einem kontinuierlichen, definierten Luftmolenstrom.

Zunächst werden zwei Messerien in der unter Vakuum stehenden Saugerleitung 1 durchgeführt. Dabei wird der Gasgemischgesamtdruck mit einem Druckmessystem 9 und der Partialdruck des Sauerstoffs 3, der hier als Tracer verwendet und im folgenden so benannt wird, mit einem Druckmessystem 10 ermittelt. Das Druckmessystem 9 ist ein barometrisches Standarddruckmessystem und bei Druckmessystems 10 handelt es sich um ein Sauerstoffpartialdruckmessgerät.

Für die anschliessenden Betrachtungen werden folgenden Vereinbarungen getroffen:

A/AT : Sauerstoff-/Tracer-Partialdruck, erste Messung
B : Gasgemischgesamtdruck, erste Messung
C/CT : Sauerstoff-/Tracer-Molanteil, erste Messung
D/DT : Sauerstoff-/Tracer-Molenstrom, erste Messung
E : Gesamtmolenstrom, erste Messung
F/FT : Sauerstoff-/Tracer-Partialdruck, zweite Messung
G : Gasgemischgesamtdruck, zweite Messung
H/HT : Sauerstoff-/Tracer-Molanteil, zweite Messung
I/IT : Sauerstoff-/Tracer-Molenstrom, zweite Messung
J : Gesamtmolenstrom, zweite Messung
K/KT : Luftmolenstrom/Tracer-Molenstrom
L : Gesamtmassenstrom
M : Mittlere Molmasse des Gasgemisches
N : Stickstoffmolanteil, 79% in Luft
P : Wasserdampfmolanteil

In der ersten Messerie werden nun der Gasgemischgesamtdruck B und der Sauerstoffpartialdruck A gemessen, wobei die Kritische Blende 4 geschlossen ist und somit die Messungen ohne Tracer-Anreicherung des Gasgemisches erfolgen.

Der Molanteil des Sauerstoffs errechnet sich nun aus demm Verhältnis des Sauerstoffpartialdruckes zum Gasgemischgesamtdruck zu:

$$C = A / B \qquad (I)$$

Weithin gilt für den Sauerstoffmolenstrom aus dem Verhältnis der Molenströme:

$$C = D / E \qquad (II)$$

Wird nun die Kritische Blende 4 stromaufwärts der Druckmessstellen 9 und 10 zur atmosphärische Umgebung geöffnet, so erhöhen sich der Gasgemischgesamtdruck und aufgrund der einströmenden Luft der Sauerstoffpartialdruck.

Die zweite Messerie wird aufgenommen im mit Luft angereicherten System durch Messung des Gasgemischgesamtdruckes G und des Sauerstoffpartialdruckes F. Der Sauerstoffmolanteil ergibt sich nun zu:

$$H = F / G \qquad (III)$$

Weiterhin gilt für den Sauerstoffmolanteil nun aus dem Verhältnis der Molenströme:

$$H = I / J. \qquad (IV)$$

Die Differenz der Gesamtmolenströme J und E stellt den einströmenden Luftmolenstrom K dar und ist gleichermassen die Massenbilanz des Gesamtsystems:

$$J - E = K \qquad (V)$$

Berücksichtigt man den Sauerstoffanteil der Luft zu 21%, so lässt sich mit Gleichung V die Sauerstoffbilanz aus der Differenz der Sauerstoffmolenströme im angereicherten Zustand I und nichtangereicherten D bestimmen zu:

$$I - D = 0.21 \, K \qquad (VI)$$

Setzt man I und D aus den Gleichungen II und IV in VI ein, so erhält man:

$$0.21 \, K = J \, H - E \, C. \qquad (VII)$$

Ersetzt man J nun mittels der Massenbilanz V, so gilt:

$$0.21\ K = H\ (K + E) - E\ C, \qquad (VIII)$$

woraus sich der Gesamtmolenstrom aus der ersten Messung zu:

$$E = K\ (0.21 - H) / (H - C) \qquad (IX)$$

ergibt, und nach der Multiplikation des Gesamtmolenstromes mit der mittleren molaren Masse des gesamten Gasgemisches M für den Gesamtmassenstrom L folgt:

$$L = E\ M = M\ K\ (0.21 - H) / (H - C). \qquad (X)$$

Dabei berechnet sich die mittlere Molmasse des Gasgemisches aus den folgenden Beziehungen: Die Summe der Molanteile der am Gasgemisch in der Saugerleitung beteiligten Komponenten, nämlich Wasserdampf, Stickstoff und Sauerstoff ergibt 1:

$$P + C + N = 1, \qquad (XI)$$

wobei für den Stickstoffmolenstrom weiterhin gilt:

$$N = C\ 0.79/0.21. \qquad (XII)$$

Die mittlere Molmasse ergibt sich nun unter Berücksichtigung der Luftmolmasse von 28.96 und der Wassermolmasse von 18.003 zu:

$$M = 28.96\ (C + N) + 18.003\ P, \qquad (XIII)$$

und mit

$$P = 1 - C - N \qquad (XIV)$$

aus Gleichung XI und N aus Gleichung XII folgt für die mittlere Molmasse des Gasgemisches:

$$M = 18.003 + 52.18\ C, \qquad (XV)$$

womit die der Gesamtmassenstrom L bestimmt ist.

Ist das Druckverhältnis zwischen dem Vakuum in der Saugerleitung 1 und dem zuzuführenden Tracer 3 nicht überkritisch, so wird gemäss Fig. 3 eine Konstantvolumenstrompumpe 15 zwischen einem den Tracer enthaltenden Behältnis 5 und der Saugerleitung 1 montiert. Dadurch wird bei Bedarf das Gasgemisch kontinuierlich mit einem definierten Molenstrom des Tracers 3 angereichert, bevor die Druckmesserie für das angereicherte Gasgemisch durchgeführt wird.

Obwohl die beschriebenen Beispiele aus dem Kraftwerksanlagenbereich entnommen sind, ist die Anwendung des Verfahrens zur Gesamtmassenstrombestimmung strömender Gasgemische keineswegs auf diese Fälle beschränkt, wobei auch andere Gase als Sauerstoff die Tracer-Funktion ausüben können.

**Bezugszeichenliste**

| | |
|---|---|
| 1 | Saugerleitung |
| 2 | Gasgemisch |
| 3 | Tracer-Gas |
| 4 | Kritische Blende, verschliessbar |
| 5 | Behältnis |
| 6 | Nierderdruckturbine |
| 7 | Kondensator |
| 8 | Wasserstrahlsaugerpumpe |
| 9 | Messystem für Gesamtdruck |
| 10 | Messystem für Sauerstoffpartialdruck |
| 11 | Dampfleitung |
| 12 | Dampfleitungen |
| 13 | Kondensationsbündel |
| 14 | Luftkühler |
| 15 | Volumenstrompumpe |

**Patentansprüche**

**1.** Verfahren zur Ermittlung des Gesamtmassenstromes eines in einer unter Vakuum stehenden Leitung (1) strömenden Gasgemisches (2), unter Verwendung eines an diesem Gasgemisch beteiligten Gases (3) als Tracer, wobei die Komponenten des Gasgemisches bekannt sind, **dadurch gekennzeichnet**,

    a) dass in einer ersten Phase in der Leitung (1) der Gesamtdruck des Gasgemisches (2) und der Partialdruck des am Gasgemisch beteiligten Tracers (3) gemessen werden und der Molanteil für den Tracer bestimmt wird aus dem Verhältnis des Tracer-Partialdruckes zum Gesamtdruck,

    b) dass anschliessend stromaufwärts des Messortes für die Druckmessungen (9, 10) ein definierter Molenstrom (3) des Tracers dem Gasgemisch (2) zugeführt wird, wodurch der Partialdruck des Tracers und der Gesamtdruck des Gasgemisches ansteigen,

    c) dass in einer weiteren Phase in der Leitung (1) wiederum der Gesamtdruck des angereicherten Gasgemisches (2) und der Partialdruck des am Gasgemisch beteiligten Tracers (3) gemessen werden und der nun resultierende Molanteil für den Tracer bestimmt wird aus dem Verhältnis des Tracer-Partialdruckes zum Gesamtdruck,

d) dass mit den Verhältnissen der Molenströme von Tracer-Molenstrom zu Gasgemischmolenstrom ebenfalls die Molanteile des Tracers gebildet werden und hieraus der Gesamtmassenstrom ermittelt wird.

2. Verfahren nach Anspruch 1, **dadurch gekennzeichnet, dass** für den Molanteil des Tracers (CT) im nicht angereicherten Zustand des Gasgemisches mit Tracer aufgrund des Druckverhältnisses des Tracer-Partialdruckes (AT) zum Gesamtdruck (B) gilt:

$$CT = AT / B,$$

und weiterhin für den Tracers-Molanteil (CT) aufgrund des Verhältnisses der Molenströme des Tracer-Molenstromes (DT) zum Gesamtmolenstrom (E) gilt:

$$CT = DT / E,$$

und dass im angereicherten Zustand des Gasgemisches mit Tracer für den Molanteil des Tracers (HT) aufgrund des Druckverhältnisses des Tracer-Partialdruckes (FT) zum Gesamtdruck (G) gilt:

$$HT = FT / G,$$

und weiterhin für den Tracer-Molanteil (HT) aufgrund des Verhältnisses der Molenströme des Tracer-Molenstromes (IT) zum Gesamtmolenstrom (J) gilt:

$$HT = IT / J,$$

und dass, mittels der Massenbilanz des Gesamtmassenstromes und der des Tracers, für den Gesamtmassenstrom (L) gilt:

$$L = KT \, M \, (1 - HT) / (HT - CT),$$

mit    KT: zugeführter Tracer-Molenstrom
und     M: mittlere Molmasse des Gasgemisches.

3. Verfahren nach Anspruch 1, bei dem Sauerstoff als Tracer fungiert, und das Druckverhältnis zwischen Innendruck der Leitung (1) und der umgebenden Atmosphäre überkritisch ist,
**dadurch gekennzeichnet,**
**dass** atmosphärische Luft mit bekanntem Sauerstoffanteil, für die definierte Anreicherung des Gasgemisches mit dem Tracer durch eine verschliessbare Kritische Blende in die Leitung strömt.

4. Verfahren nach Anspruch 1,
**dadurch gekennzeichnet,**
**dass** die definierte Tracer-Anreicherung des Gasgemisches mittels einer Volumenstrompumpe (15) aus einem Behältnis (5) erfolgt.

**Claims**

1. Method for determining the total mass flow of a gas mixture (2) flowing through a line (1) under vacuum, by using as tracer a gas (3) contained in this gas mixture, the components of the gas mixture being known, **characterized**

a) in that in a first phase, the total pressure of the gas mixture (2) and the partial pressure of the tracer (3) contained in the gas mixture are measured in the line (1), and the molar proportion for the tracer is determined from the ratio of the tracer partial pressure to the total pressure,
b) in that subsequently, upstream of the measurement site for the pressure measurements (9, 10), a defined molar flow (3) of the tracer is fed to the gas mixture (2), as a result of which the partial pressure of the tracer and the total pressure of the gas mixture increase,
c) in that in a further phase, the total pressure of the enriched gas mixture (2) and the partial pressure of the tracer (3) contained in the gas mixture are measured in the line (1), and the then resulting molar proportion for the tracer is determined from the ratio of the tracer partial pressure to the total pressure,
d) in that the molar proportions of the tracer are also formed using the ratios of the molar flows of tracer molar flow to gas mixture molar flow, and the total mass flow is determined therefrom.

2. Method according to Claim 1, **characterized in that** the molar proportion of the tracer (CT) when the gas mixture is not enriched with tracer is given on the basis of the pressure ratio of the tracer partial pressure (AT) to the total pressure (B) by:

$$CT = AT / B,$$

and, in addition, the tracer molar proportion (CT) is given on the basis of the ratio of the molar flows of the tracer molar flow (DT) to the total molar flow (E) by:

$$CT = DT / E,$$

and, when the gas mixture is enriched with tracer, the molar proportion of the tracer (HT) is given on the basis of the pressure ratio of the tracer partial pressure (FT) to the total pressure (G) by:

$$HT = FT / G,$$

and, in addition, the tracer molar proportion (HT) is given on the basis of the ratio of the molar flows of the tracer molar flow (IT) to the total molar flow (J) by:

$$HT = IT / J,$$

and **in that**, using the mass balance of the total mass flow and that of the tracer, the total mass flow (L) is given by:

$$L = KT \, M \, (1 - HT) / (HT - CT),$$

with    KT: tracer molar flow fed in
and    M: mean molar mass of the gas mixture.

3. Method according to Claim 1, in which oxygen functions as tracer and the pressure ratio between the internal pressure of the line (1) and the surrounding atmosphere is supercritical, **characterized in that** atmospheric air having a known oxygen proportion flows into the line through a closable critical orifice for defined enrichment of the gas mixture.

4. Method according to Claim 1, **characterized in that** the defined tracer enrichment of the gas mixture is carried from a container (5) using a positive displacement pump (1).

**Revendications**

1. Procédé pour la détermination du débit massique total d'un mélange gazeux (2) circulant dans une conduite (1) se trouvant sous dépression, en utilisant comme traceur un gaz (3) faisant partie de ce mélange gazeux, dans lequel les composants du mélange gazeux sont connus, **caractérisé**

    a) en ce que, dans une première phase, on mesure dans la conduite (1) la pression totale du mélange gazeux (2) et la pression partielle du traceur (3) faisant partie du mélange gazeux et on détermine la fraction molaire du traceur à partir du rapport entre la pression partielle du traceur et la pression totale,

    b) en ce qu'ensuite, en amont du point de mesure des mesures de pression (9, 10), on ajoute au mélange gazeux (2) un débit molaire défini du traceur (3), ce qui fait augmenter la pression partielle du traceur et la pression totale du mélange gazeux,

    c) en ce que, dans une phase ultérieure, on mesure à nouveau dans la conduite (1) la pression totale du mélange gazeux (2) enrichi et la pression partielle du traceur (3) faisant partie du mélange gazeux et on détermine la fraction molaire ainsi obtenue du traceur à partir du rapport entre la pression partielle du traceur et la pression totale, et

    d) en ce qu'on forme également les fractions molaires du traceur avec les rapports des débits molaires entre le débit molaire du traceur et le débit molaire du mélange gazeux, et on en déduit le débit massique total.

2. Procédé suivant la revendication 1, **caractérisé en ce qu'**à l'état du mélange gazeux non enrichi avec le traceur, on a, pour la fraction molaire du traceur (CT), sur la base du rapport des pressions entre la pression partielle du traceur (AT) et la pression totale (B):

$$CT = AT / B,$$

et en outre, pour la fraction molaire du traceur (CT), on a, sur la base du rapport des débits molaires entre le débit molaire du traceur (DT) et le débit molaire total (E):

$$CT = DT / E,$$

et **en ce qu'**à l'état du mélange gazeux enrichi avec le traceur, on a, pour la fraction molaire du traceur (HT), sur la base du rapport des pressions entre la pression partielle du traceur (FT) et la pression totale (G):

$$HT = FT / G,$$

et en outre, pour la fraction molaire du traceur (HT), on a, sur la base du rapport des débits molaires entre le débit molaire du traceur (IT) et le débit molaire total (J) :

$$HT = IT / J,$$

et **en ce que**, au moyen du bilan massique du débit massique total et de celui du traceur, on a pour le débit massique total (L):

$$L = KT \, M \, (1 - HT) / (HT - CT),$$

avec      KT: débit molaire du traceur ajouté et      M: masse molaire moyenne du mélange gazeux.

3. Procédé suivant la revendication 1, dans lequel l'oxygène joue le rôle de traceur, et le rapport des pressions entre la pression intérieure de la conduite (1) et l'atmosphère ambiante est supercritique, **caractérisé en ce que** de l'air atmosphérique, avec une teneur en oxygène connue, pénètre dans la conduite à travers un diaphragme critique pouvant être obturé, en vue de l'enrichissement défini du mélange gazeux avec le traceur.

4. Procédé suivant la revendication 1, **caractérisé en ce que** l'enrichissement défini du mélange gazeux en traceur se fait au moyen d'une pompe volumétrique (15) à partir d'un réservoir (5).

FIG. 1

FIG. 2

FIG. 3